(19) Europäisches Patentamt
European Patent Office
Office européen des brevets

(11) **EP 3 025 045 B1**

(12) **EUROPÄISCHE PATENTSCHRIFT**

(45) Veröffentlichungstag und Bekanntmachung des Hinweises auf die Patenterteilung:
**22.02.2017  Patentblatt 2017/08**

(21) Anmeldenummer: **14828166.0**

(22) Anmeldetag: **29.12.2014**

(51) Int Cl.:
*F01N 3/20* (2006.01)   *F02D 41/12* (2006.01)
*F02D 41/14* (2006.01)   *F02D 41/22* (2006.01)
*F02D 41/00* (2006.01)   *F01N 11/00* (2006.01)
*F02M 26/15* (2016.01)

(86) Internationale Anmeldenummer:
**PCT/EP2014/079390**

(87) Internationale Veröffentlichungsnummer:
**WO 2015/110247 (30.07.2015 Gazette 2015/30)**

(54) **VERFAHREN ZUR DIAGNOSE EINES ABGASKATALYSATORS SOWIE KRAFTFAHRZEUG**

METHOD FOR DIAGNOSING AN EXHAUST GAS CATALYTIC CONVERTER, AND MOTOR VEHICLE

PROCÉDÉ DE DIAGNOSTIC D'UN CONVERTISSEUR CATALYTIQUE AINSI QUE VÉHICULE À MOTEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.01.2014  DE 102014201000**

(43) Veröffentlichungstag der Anmeldung:
**01.06.2016  Patentblatt 2016/22**

(73) Patentinhaber: **Volkswagen Aktiengesellschaft 38440 Wolfsburg (DE)**

(72) Erfinder:
• **VELDTEN, Burkhard**
  **31234 Edemissen (DE)**
• **KULASZEWSKI, Maciej**
  **38120 Braunschweig (DE)**

(74) Vertreter: **Gulde & Partner Patent- und Rechtsanwaltskanzlei mbB Wallstraße 58/59 10179 Berlin (DE)**

(56) Entgegenhaltungen:
**WO-A1-2004/046528      WO-A1-2013/139848 WO-A1-2014/095215**

**Beschreibung**

Die Erfindung betrifft ein Verfahren zur Diagnose eines in einem Abgaskanal einer Verbrennungskraftmaschine eines Kraftfahrzeugs angeordneten und zur Konvertierung mindestens einer Abgaskomponente geeigneten Abgaskatalysators, insbesondere eines SCR-Katalysators. Die Erfindung betrifft ferner ein zu Ausführung des Verfahrens eingerichtetes Kraftfahrzeug.

Brennkraftmaschinen, die ständig oder zeitweise mit einem mageren Luft-Kraftstoff-Gemisch betrieben werden, produzieren Stickoxide $NO_X$ (hauptsächlich $NO_2$ und NO), welche $NO_X$-reduzierende Maßnahmen erforderlich machen. Eine motorische Maßnahme, um die $NO_X$-Rohemission im Abgas zu reduzieren, stellt die Abgasrückführung (AGR) dar, bei der ein Teil des Abgases der Brennkraftmaschine in ihre Verbrennungsluft rückgeführt wird. Hierdurch werden die Verbrennungstemperaturen gesenkt und somit die $NO_X$-Entstehung ($NO_X$-Rohemission) reduziert. Die Abgasrückführung allein ist jedoch in der Regel nicht ausreichend, um gesetzliche $NO_X$-Grenzwerte einzuhalten, weswegen zusätzlich eine aktive Abgasnachbehandlung erforderlich ist, welche die $NO_X$-Endemission durch katalytische Reduzierung von $NO_X$ zu Stickstoff $N_2$ senkt. Eine bekannte $NO_X$-Abgasnachbehandlung sieht den Einsatz von $NO_X$-Speicherkatalysatoren vor. Diese speichern im mageren Betrieb ($\lambda$ > 1) Stickoxide in Form von Nitraten. Während kurzer Fett-Intervalle ($\lambda$ < 1) werden die Stickoxide wieder desorbiert und in Gegenwart der im fetten Abgas vorhandenen Reduktionsmittel zu Stickstoff $N_2$ reduziert.

Als weiterer Ansatz zur Konvertierung von Stickoxiden in Abgasen magerlauffähiger Verbrennungsmotoren ist der Einsatz von Katalysatorsystemen bekannt, die nach dem Prinzip der selektiven katalytischen Reduktion (SCR für selective catalytic reduction) arbeiten. Diese Systeme umfassen zumindest einen SCR-Katalysator, der in Gegenwart eines dem Abgas zugeführten Reduktionsmittels, üblicherweise Ammoniak $NH_3$, selektiv die Stickoxide des mageren Abgases in Stickstoff und Wasser umwandelt. Dabei kann das Ammoniak aus einer wässrigen Ammoniaklösung dem Abgasstrom zudosiert werden. Üblicherweise wird es jedoch aus einer Vorläuferverbindung, beispielsweise Harnstoff in Form einer wässrigen Lösung oder fester Pellets, im Wege der Thermolyse und Hydrolyse erhalten.

Es ist ferner bekannt, die Funktionsfähigkeit von Abgaskatalysatoren, wie etwa SCR-Katalysatoren oder $NO_X$-Speicherkatalysatoren, im Wege einer On-Board-Diagnose (OBD) laufend zu kontrollieren. Hierzu wird üblicherweise das Signal eines dem Katalysator nachgeschalteten Abgassensors für die entsprechende Abgaskomponente verwendet, um die Konzentration dieser Abgaskomponente stromab des Abgaskatalysators zu messen. Ferner wird die Konzentration der Abgaskomponente stromauf des Katalysators, d.h. die motorische Rohemission, bestimmt. Dieses kann durch Messung der Konzentration mittels eines weiteren, stromauf des Katalysators angeordneten Abgassensors erfolgen. Häufiger erfolgt die Ermittlung der Rohemission jedoch durch Modellierung unter Verwendung gespeicherter Kennfelder, welche die Konzentration der Komponente in Abhängigkeit von einem aktuellen Betriebspunkt der Brennkraftmaschine abbilden. Der Zustand des Abgaskatalysators hinsichtlich der Konvertierung der Komponente ergibt sich dann in Abhängigkeit von der stromab des Katalysators gemessenen Konzentration und der gemessenen oder modellierten Konzentration vor dem Katalysator, d.h. der Rohemission der Brennkraftmaschine. Der Zustand des Abgaskatalysators kann beispielsweise in Form des Wirkungsgrads $\eta$ gemäß nachstehender Gleichung berechnet werden, wobei c2 die hinter dem Katalysator gemessene Konzentration (oder der Gehalt) der Abgaskomponente und c1 die Rohemission der Brennkraftmaschine hinsichtlich dieser Komponente bedeutet:

$$\eta = 1 - \frac{c2}{c1}$$

Der Wirkungsgrad $\eta$ kann damit Werte von 0 bis 1 einnehmen. Ein ideal funktionierender Katalysator, der eine vollständige katalytische Umsetzung bewirkt (c2 = 0), weist damit einen Wirkungsgrad $\eta$ von 1 auf, während bei einem vollständig inaktiven Katalysator $\eta$ = 0 ist (c1 = c2).

DE 10 2010 042 442 A1 beschreibt eine Abgasanlage mit einem SCR-Katalysator sowie mit einer Niederdruck(ND)-Abgasrückführung, mittels welcher ein Abgasteilstrom stromab einer Turbine (niederdruckseitig) eines Abgasturboladers sowie des SCR-Katalysators entnommen und der Verbrennungsluft der Brennkraftmaschine stromauf eines Verdichters (niederdruckseitig) des Abgasturboladers zugeführt wird. In der Abgasrückführleitung ist ein $NO_X$-Sensor angeordnet, welcher die Konzentration an Stickoxiden misst, um die Brennkraftmaschine auf Basis der so ermittelten $NO_X$-Konzentration zu steuern, insbesondere die AGR-Rate oder das Luftkraftstoffverhältnis. Die Abgasrückführleitung ist ferner über einen Bypass mit der Luftleitung der Brennkraftmaschine verbunden, welcher stromab des Verdichters, also auf seiner Hochdruckseite, in die Luftleitung mündet. Um einen Offset des $NO_X$-Sensors für dessen Kalibrierung zu bestimmen, wird der Bypass geöffnet und hierdurch eine Umkehr der Strömungsrichtung in der Abgasrückführleitung bewirkt, sodass der $NO_X$-Sensor mit Frischluft beaufschlagt wird. Eine Diagnose des SCR-Katalysators wird hier nicht beschrieben.

Aus DE 10 2010 050 413 A1 ist eine Abgasanlage einer Brennkraftmaschine bekannt, die einen Oxidationskatalysator, einen Partikelfilter sowie einen SCR-Katalysator aufweist, wobei optional der Partikelfilter eine SCR-katalytische Beschichtung aufweisen und auf einen separaten SCR-Katalysator verzichtet werden kann. Darüber hinaus verfügt die Brennkraftmaschine über eine doppelte Aufladung mit einer Kombination aus Hochdruck(HD)- und Niederdruck(ND)-AGR, bei der die ND-AGR-Leitung stromab des Partikelfilters abzweigt und einen weiteren SCR-Katalysator beherbergt.

DE 103 49 126 A1 beschreibt die zuvor beschriebene Vorgehensweise zur Ermittlung des Wirkungsgrads eines SCR-Katalysators entweder mittels jeweils eines $NO_X$-Sensors stromauf und stromab des Katalysators oder - anstelle des vorderen Sensors - mittels eines rechnerischen Modells für die $NO_X$-Rohemission. Fällt der ermittelte NOX-Wirkungsgrad des SCR-Katalysators unterhalb eines vorbestimmten Basiswirkungsgrads, erfolgt eine Regeneration des Katalysators von abgelagerten Kohlenwasserstoffen und Ruß.

Beide vorstehend beschriebenen Vorgehensweisen zur Diagnose eines Abgaskatalysators weisen Nachteile auf. Die Anordnung von jeweils einem Abgassensor stromauf und stromab des Katalysators stellt einen kostenintensiven apparativen Mehraufwand dar. Wird hingegen der stromaufwärtige Abgassensor durch ein rechnerisches Modell zur Ermittlung der Rohemission der entsprechenden Abgaskomponente ersetzt, so kann hierdurch die Diagnoserobustheit aufgrund der unvermeidlichen Ungenauigkeit beziehungsweise Unzuverlässigkeit des verwendeten rechnerischen Modells beeinträchtigt werden. Zudem ist auch die Verwendung eines entsprechenden Modells mit Mehrkosten verbunden.

WO 2004/046528 A1 beschreibt ein Verfahren zur Diagnose eines in einem Abgastrakt einer Brennkraftmaschine angeordneten Abgaskatalysators, wobei der Abgastrakt eine stromauf des Abgaskatalysators angeordnete Lambdasonde sowie ein Abgasrückführsystem aufweist. Das Verfahren sieht die Durchführung einer Testeinspritzung in einem Expansions- oder Auslasstakt der Brennkraftmaschine vor, sodass der eingespritzte Kraftstoff nicht verbrannt wird und unverbrannt den Katalysator passiert. Es wird sodann die durch die Testeinspritzung verursachte Leistungserhöhung bestimmt und hieraus auf die Konvertierungsleistung des Katalysators rückgeschlossen.

WO 2013/139848 A1 betrifft ein Verfahren zum Betreiben einer Brennkraftmaschine, wobei eine AGR-Rate in Abhängigkeit von der Konvertierungsleistung eines SCR-Katalysators gesteuert wird, um die NOx-Rohemissionen bei einem gealterten Katalysator zu reduzieren. Es wird kein Diagnoseverfahren offenbart.

Die nachveröffentlichte WO 2014/095215 A1 beschreibt ein Diagnoseverfahren für einen Abgaskatalysator, wobei die Rohemission einer Abgaskomponente betriebspunktabhängig und kennfeldmäßig ermittelt wird, die Konzentration stromauf des Katalysators gemessen wird und ein Diagnosewert in Abhängigkeit von diesen Größen sowie der AGR-Rate berechnet wird.

Der Erfindung liegt nun die Aufgabe zugrunde, ein Verfahren zur Diagnose eines Abgaskatalysators bereitzustellen, das eine hohe Diagnoserobustheit aufweist und gleichzeitig mit einem geringen Kostenaufwand einhergeht.

Die Aufgabe wird durch ein Verfahren sowie ein Kraftfahrzeug mit den Merkmalen der unabhängigen Ansprüche gelöst. Bevorzugte Ausgestaltungen der Erfindung sind Gegenstand der abhängigen Ansprüche.

Das erfindungsgemäße Verfahren betrifft die Diagnose eines in einem Abgastrakt einer Brennkraftmaschine eines Kraftfahrzeugs angeordneten und zur Konvertierung mindestens einer Abgaskomponente geeigneten Abgaskatalysators. Dabei ist im Abgastrakt stromauf des Abgaskatalysators ein Abgassensor angeordnet. Weiterhin weist der Abgastrakt ein Abgasrückführsystem auf, das ausgebildet ist, zumindest einen Teil des Abgases stromab des Abgaskatalysators aus einem Abgaskanal des Abgastrakts zu entnehmen und der Brennkraftmaschine, genauer gesagt ihrer Verbrennungsluft, zuzuführen. Das erfindungsgemäße Verfahren umfasst die Schritte:

- Messen einer ersten Konzentration der Abgaskomponente stromauf des Abgaskatalysators mittels des Abgassensors während eines gefeuerten Betriebs der Brennkraftmaschine,
- Rückführen zumindest eines Teils des Abgases über das Abgasrückführsystem während eines ungefeuerten Schubbetriebs der Brennkraftmaschine,
- Messen einer zweiten Konzentration der Abgaskomponente mittels des Abgassensors während des ungefeuerten Schubbetriebs der Brennkraftmaschine und
- Bestimmen eines Zustands des Abgaskatalysators in Abhängigkeit von der ersten und zweiten Konzentration der Abgaskomponente.

Durch die erfindungsgemäße Vorgehensweise wird mittels nur eines einzigen Abgassensors, der stromauf des zu überwachenden Abgaskatalysators angeordnet ist, sowohl die Konzentration der Abgaskomponente stromauf des Katalysators, also die Rohemission der Brennkraftmaschine, gemessen als auch die Konzentration dieser Abgaskomponente nach Passieren des Katalysators. Zu dem zuletzt genannten Zweck wird das den Katalysator verlassende Abgas über das AGR-System zur Brennkraftmaschine zurückgeführt und ein ungefeuerter Schubbetrieb derselben genutzt, um die Abgaszusammensetzung möglichst wenig zu beeinflussen. Durch Verwendung eines einzigen Abgassensors werden Mehrkosten für die Anordnung eines im Stand der Technik üblichen zweiten Sensors hinter dem Katalysator vermieden. Zudem werden mögliche Sensorabweichungen zwischen den zwei Sensoren durch Verwendung eines einzigen Sensors kompensiert. Da das Verfahren ferner kein rechnerisches Modell zur Ermittlung der motorischen Rohemission der Abgaskomponente verwendet, entfallen Unsicherheiten, die durch Ungenauigkeiten eines solchen Modells verursacht werden. Das erfindungsgemäße Verfahren ist daher besonders zuverlässig.

Im Rahmen der vorliegenden Erfindung wird unter dem Begriff "Konzentration der Abgaskomponente" jegliche Größe verstanden, welche den Gehalt des Abgases bezüglich dieser Komponente widerspiegelt. Er umfasst somit auch das Signal des Abgassensors, beispielsweise seine Sensorspannung oder dergleichen. Der Begriff "gefeuerter Betrieb" umfasst einen Betriebsmodus, bei dem die Brennkraftmaschine unter Kraftstoffzufuhr und -verbrennung betrieben wird. Demgegenüber wird unter einem "ungefeuerten Betrieb" ein Betriebsmodus der Brennkraftmaschine verstanden, bei der dieser kein Kraftstoff zugeführt wird. Eine solche Kraftstoffabschaltung erfolgt insbesondere in einer Schubphase des Kraftfahrzeugs, bei der die aktuelle kinetische Energie des Fahrzeugs größer ist als ein angefordertes Drehmoment, das heißt, wenn die Brennkraftmaschine durch das Fahrzeug geschleppt, also in Drehbewegung gehalten wird (Schubbetrieb).

In bevorzugter Ausgestaltung der Erfindung umfasst die Abgaskomponente Stickoxide $NO_X$, worunter sämtliche Oxide des Stickstoffs, insbesondere NO, $NO_2$ und $N_2O$ verstanden werden. In diesem Falle handelt es sich bei dem Abgaskatalysator um einem $NO_X$-Katalysator, der Stickoxide des Abgases in einer fetten Abgasatmosphäre, das heißt in Gegenwart von Reduktionsmitteln im Abgas, wie unverbrannte Kohlenstoffe HC und Kohlenmonoxid CO, umzusetzen vermag, oder um einen SCR-Katalysator, der Stickoxide in einer mageren Abgasatmosphäre in Gegenwart eines zugeführten Reduktionsmittels selektiv konvertiert. Dabei umfasst das Reduktionsmittel insbesondere Ammoniak $NH_3$, das direkt oder in Form einer Vorläufersubstanz, insbesondere in Form von Harnstoff in fester oder gelöster Form, dem Abgas zugeführt wird. Der Abgassensor ist in dieser Ausführung ein $NO_X$-Sensor, der zur Detektion von Stickoxiden im Abgas ausgebildet ist. Die Erfindung entfaltet in einem solchen SCR-Katalysatorsystem besondere Vorteile, da die Reduktionsmitteldosierung in das Abgas stromauf des Katalysators in besonderem Maße auf den Katalysatorzustand abgestimmt werden muss. Andernfalls führt eine Über- oder Unterdosierung des Reduktionsmittels zu unerwünschten Reduktionsmitteldurchbrüchen hinter dem Katalysator beziehungsweise zu einer unzureichenden $NO_X$-Konvertierung. Zudem kann das Verfahren auch dazu genutzt werden, um die Reduktionsmittelqualität, beispielsweise eine Konzentration von Harnstoff in einer wässrigen Harnstofflösung, zu ermitteln und die Dosierung hieran anzupassen.

Vorzugsweise erfolgt das Messen der ersten Konzentration der Abgaskomponente nach Feststellung einer Schubphase des Fahrzeugs vor Beginn des ungefeuerten Schubbetriebs der Brennkraftmaschine, insbesondere unmittelbar vor Beginn des ungefeuerten Schubbetriebs. Hierdurch wird ermöglicht, dass dasselbe Abgasvolumen, in welchem bereits die erste Konzentration der Abgaskomponente gemessen wird, auch für die in dem ungefeuerten Schubbetrieb gemessene zweite Konzentration verwendet wird. Auf diese Weise wird die Genauigkeit des Verfahrens weiter verbessert.

Vorzugsweise erfolgt das Messen der zweiten Konzentration der Abgaskomponente während des ungefeuerten Schubbetriebs der Brennkraftmaschine nach Ablauf einer vorbestimmten Wartezeit. Hierdurch wird hierdurch sichergestellt, dass die AGR-Leitung ausreichend gespült und eventuell in der AGR-Leitung vorhandenes Abgas anderer Zusammensetzung entfernt wird. Vorzugsweise wird die Wartezeit mindestens entsprechend einer Abgaszirkulationszeit seit der Messung der ersten Konzentration der Abgaskomponente vorbestimmt. Dies ermöglicht, dass dem Abgas nach Passieren des Abgassensors bei der ersten Konzentrationsmessung ausreichend Zeit zum Durchlaufen der Abgasrückführleitung und der Brennkraftmaschine gegeben wird, ehe es wieder an die Messstelle des Abgassensors gelangt. Mit anderen Worten entspricht der Abstand zwischen der ersten und der zweiten Messung der Konzentration vorzugsweise im Wesentlichen der Dauer, die das Abgas für die vollständige Zirkulation von dem Abgassensor über den Abgaskatalysator, die AGR-Leitung und die Brennkraftmaschine benötigt, ehe es wieder den Abgassensor erreicht.

Es ist besonders bevorzugt vorgesehen, dass während des ungefeuerten Schubbetriebs der Brennkraftmaschine das gesamte Abgas über das Abgasrückführsystem rückgeführt wird. Hierdurch wird erreicht, dass das rückgeführte Abgas in kurzer Zeit und unverändert den Abgassensor erneut erreicht. Auf diese Weise können auch sehr kurze Schubphasen des Fahrzeugs beziehungsweise kurze Schubbetriebe der Brennkraftmaschine zur Diagnose des Abgaskatalysators verwendet werden.

In bevorzugter Ausführung der Erfindung weist der Abgaskanal stromab einer Abzweigungsstelle der AGR-Leitung ein Abgassperrmittel auf, welches in einer Schließstellung den Durchflussquerschnitt des Abgaskanals zu verringern oder vollständig zu schließen vermag. Das Abgassperrmittel kann etwa als Abgasklappe, vorzugsweise als eine kontinuierlich stellbare Abgasklappe ausgebildet sein. Die Rückführung des Abgases über das Abgasrückführsystem während des ungefeuerten Schubbetriebs der Brennkraftmaschine erfolgt vorzugsweise durch Schließen des Abgassperrmittels. Auf diese Weise kann eine weitestgehend vollständige und schnelle Rückführung des Abgases erzwungen werden.

Ein weiterer Aspekt der vorliegenden Erfindung betrifft ein Kraftfahrzeug, umfassend:

- eine Brennkraftmaschine,
- einen Abgastrakt mit einem Abgaskanal, einem in dem Abgaskanal angeordneten und zur Konvertierung mindestens einer Abgaskomponente geeigneten Abgaskatalysator und einen stromauf des Abgaskatalysators angeordneten Abgassensor zur Detektion der Abgaskomponente,

- ein Abgasrückführsystem, das eingerichtet ist, zumindest einen Teil des Abgases stromab des Abgaskatalysators aus dem Abgaskanal zu entnehmen und der Verbrennungskraftmaschine zuzuführen, und
- eine zur Ausführung des Verfahrens zur Diagnose des Abgaskatalysators eingerichtete Diagnoseeinrichtung.

Die Steuereinrichtung weist insbesondere einen computerlesbaren Algorithmus zur Ausführung des Verfahrens auf. Gegebenenfalls beinhaltet sie ferner notwendige Kennlinien und/oder Kennfelder, beispielsweise eine Kennlinie des verwendeten Abgassensors.

In bevorzugter Ausgestaltung umfasst das Kraftfahrzeug ferner ein stromab der Abzweigungsstelle der AGR-Leitung angeordnetes Abgassperrmittel, das vorstehend bereits beschrieben wurde. Das Absperrmittel ermöglicht eine weitgehend vollständige und schnelle Rückführung des Abgasstroms.

Gemäß einer weiteren Ausgestaltung umfasst das Kraftfahrzeug ferner einen Abgasturbolader mit einer in dem Abgaskanal angeordneten Turbine, wobei das Abgasrückführsystem als Niederdruck-Abgasrückführsystem ausgestaltet ist, d.h. die AGR-Leitung stromab (niederdruckseitig) der Turbine von dem Abgaskanal abzweigt.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:

Figur 1 eine schematische Darstellung einer Abgasanlage eines Kraftfahrzeugs nach einer vorteilhaften Ausgestaltung der Erfindung und

Figur 2 ein Fließdiagramm zur Durchführung einer Diagnose eines SCR-Katalysators nach einer vorteilhaften Ausgestaltung der Erfindung.

Die Erfindung wird nachfolgend am Beispiel der Diagnose eines SCR-Katalysators dargestellt. Es versteht sich jedoch, dass die Erfindung ebenso auch für andere Abgaskatalysatoren Einsatz finden kann.

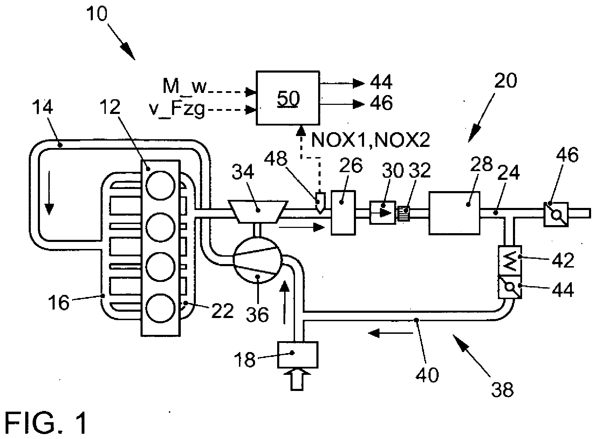

In Figur 1 ist ein insgesamt mit 10 bezeichnetes Kraftfahrzeug angedeutet, das durch eine zumindest zeitweise mager betriebene Brennkraftmaschine 12, insbesondere einen Dieselmotor, als Traktionsquelle angetrieben wird. Die Brennkraftmaschine 12 weist hier beispielsweise vier Zylinder auf, wobei eine beliebige, hiervon abweichende Zylinderanzahl möglich ist.

Die Brennkraftmaschine 12 wird über eine Luftleitung 14 sowie einen daran angeschlossenen Luftkrümmer 16, der die angesaugte Luft den Zylindern zuführt, mit Verbrennungsluft versorgt. Die aus der Umgebungsluft angesaugte Verbrennungsluft wird über einen Luftfilter 18 von partikulären Bestandteilen gereinigt.

Das Kraftfahrzeug 10 weist ferner einen erfindungsgemäßen, insgesamt mit 20 bezeichneten Abgastrakt zur katalytischen Nachbehandlung eines Abgases der Brennkraftmaschine 12 auf. Der Abgastrakt 20 umfasst einen Abgaskrümmer 22, der die einzelnen Zylinderauslässe der Zylinder der Brennkraftmaschine 12 mit einem gemeinsamen Abgaskanal 24 verbindet. Der Abgaskanal 24 endet in einem Auspuffrohr (rechts in der Darstellung) und beherbergt verschiedene Komponenten zur Abgasnachbehandlung.

In dem dargestellten Beispiel trifft das Abgas zunächst auf einen Oxidationskatalysator 26. Dieser weist ein Katalysatorsubstrat auf, welches mit einer katalytischen Beschichtung beschichtet ist, welche die Oxidation von Abgaskomponenten katalysiert. Insbesondere ist diese geeignet, unverbrannte Kohlenwasserstoffe HC und Kohlenmonoxid CO in $CO_2$ und $H_2O$ umzusetzen. Darüber hinaus ist die katalytische Beschichtung des Oxidationskatalysators 26 ausgelegt, NO und $N_2O$ zu $NO_2$ zu oxidieren, um das $NO_2/NO$-Verhältnis zu vergrößern. Die katalytische Beschichtung des Oxidationskatalysators 26 enthält als katalytische Komponente insbesondere mindestens ein Element der Platingruppenmetalle Pt, Pd, Rh, Ru, Os oder Ir oder eine Kombination von diesen, insbesondere Pt und/oder Pd. Die katalytische Beschichtung enthält ferner einen Washcoat, der eine poröse keramische Matrix mit einer großen spezifischen Oberfläche umfasst, beispielsweise auf Zeolith-Basis, welche mit der katalytischen Komponente dotiert ist. Bei dem Substrat des Oxidationskatalysators 26 kann es sich um ein metallisches Substrat oder einen keramischen Monolithen handeln, insbesondere mit einer wabenähnlichen Struktur mit einer Mehrzahl durchgehender, paralleler Strömungskanäle. Geeignete keramische Materialien schließen Aluminiumoxid, Cordierit, Mullit und Siliziumcarbid ein. Geeignete Metallsubstrate sind etwa aus rostfreien Stählen oder Eisen-Chrom-Legierungen gefertigt.

Stromab des Oxidationskatalysators 26 ist ein weiterer Abgaskatalysator, hier ein SCR-Katalysator 28 im Abgaskanals 24 angeordnet. Der SCR-Katalysator 28 umfasst ebenso wie der Oxidationskatalysator 26 ein Katalysatorsubstrat auf metallischer oder keramischer Basis, vorzugsweise auf keramischer Basis. Geeignete keramische oder metallische Materialien entsprechen den im Zusammenhang mit dem Oxidationskatalysator genannten. Die inneren Wände der parallelen und durchgehenden Strömungskanäle des Substrats sind mit einer SCRkatalytischen Beschichtung beschichtet, welche die Reduktion von Stickoxiden zu Stickstoff unter selektivem Verbrauch eines Reduktionsmittels bewirkt. Die Beschichtung umfasst wiederum einen Washcoat aus einer porösen keramischen Matrix mit großer spezifischer Oberfläche (z. B. ein Zeolith auf Aluminiumsilicat-Basis) und darauf verteilt angeordnete katalytische Substanzen. Geeignete SCR-katalytische Substanzen umfassen insbesondere Nichtedelmetalle, wie Fe, Cu, Va, Cr, Mo, W, sowie Kombinationen von diesen. Diese sind auf dem Zeolith abgeschieden und/oder die Zeolithmetalle sind durch Ionenaustausch partiell durch die entsprechenden Nichtedelmetalle ersetzt.

Der Abgastrakt 20 weist ferner eine Reduktionsmitteldosiereinrichtung 30 auf, mit welcher das Reduktionsmittel oder eine Vorläuferverbindung von diesem dem Abgas zudosiert wird. Beispielsweise wird das Reduktionsmittel mittels einer Düse stromauf des SCR-Katalysators 28 in den Abgasstrom eingebracht. Bei dem Reduktionsmittel handelt es sich typischerweise um Ammoniak $NH_3$, das in Form einer Vorläuferverbindung, insbesondere in Form von Harnstoff zudosiert wird. Vorzugsweise wird der Harnstoff in Form einer wässrigen Lösung aus einem nicht dargestellten Reservoir gefördert und zudosiert. In einem der Dosiereinrichtung 30 nachgelagerten Mischer 32 wird der Harnstoff mit dem heißen Abgas vermischt und im Wege der Thermolyse und Hydrolyse zu $NH_3$ und $CO_2$ zersetzt. Das $NH_3$ wird in der Beschichtung des SCR-Katalysators 28 gespeichert und dort zur Reduzierung von Stickoxiden des Abgases verbraucht. Die Zudosierung des Reduktionsmittels über die Dosiereinrichtung 30 erfolgt üblicherweise über eine hier nicht dargestellte Steuerung, welche die Einrichtung 30 in Abhängigkeit von einem Betriebspunkt des Motors 12, insbesondere in Abhängigkeit von einer aktuellen $NO_X$-Konzentration des Abgases steuert.

Es versteht sich, dass der Abgastrakt 20 abweichend von der Figur 1 andere oder weitere Abgasnachbehandlungskomponenten aufweisen kann, insbesondere einen Partikelfilter zur Entfernung partikulärer Abgasbestandteile.

Das Fahrzeug 10 umfasst ferner einen Abgasturbolader, der eine im Abgaskanal 24 angeordnete Turbine 34 aufweist, die beispielsweise über eine Welle mit einem in der Luftleitung 14 angeordneten Verdichter 36 verbunden ist. Die Turbine 34 entzieht dem Abgas kinetische Energie, mit welcher der Verdichter 36 angetrieben und die angesaugte Verbrennungsluft komprimiert wird. Üblicherweise ist dem Verdichter 36 ein hier nicht dargestellter Ladeluftkühler nachgeschaltet, welcher der Verbrennungsluft durch die Verdichtung entstandene Wärme entzieht.

Das Kraftfahrzeug 10 verfügt darüber hinaus über eine Niederdruck-Abgasrückführung (ND-AGR) 38. Diese weist eine Abgasrückführleitung 40 auf, welche auf der Niederdruckseite der Turbine 34 und stromab des SCR-Katalysators 28 einen Teil- oder Vollstrom des Abgases dem Abgaskanal 24 entnimmt und in die Luftleitung 14 auf der Niederdruckseite des Verdichters 36 einspeist. Ein in der AGR-Leitung 40 angeordneter AGR-Kühler 42 bewirkt eine Kühlung des heißen, zurückgeführten Abgases. Durch ein ebenfalls in der AGR-Leitung 40 angeordnetes AGR-Ventil 44 kann die AGR-Rate, das heißt der rückgeführte Abgasanteil in der Verbrennungsluft der Brennkraftmaschine 12 gesteuert werden. Üblicherweise wird das AGR-Ventil 44 in Abhängigkeit von einem Betriebspunkt der Brennkraftmaschine 12 gesteuert, wobei das Ventil 44 zwischen einer vollständig geschlossenen Position (AGR-Raten von Null, vollständige Deaktivierung der AGR) und einer vollständig geöffneten Position stufenlos angesteuert werden kann.

Stromab der Abzweigungsstelle der AGR-Leitung 40 von dem Abgaskanal 24 ist ein Abgassperrmittel 46 angeordnet, das zwischen einer Schließ- und einer Öffnungsstellung vorzugsweise stufenlos verstellbar ist. Das Abgassperrmittel 46 kann beispielsweise als Abgasklappe ausgebildet sein. In seiner Schließstellung sperrt das Abgassperrmittel 46 die Abgasleitung 24 im Wesentlichen vollständig.

Wie alle Abgaskatalysatoren unterliegt auch der SCR-Katalysator 28 einer altersbedingten Verschlechterung seiner katalytischen Aktivität. Aus diesem Grund ist eine laufende Diagnose des SCR-Katalysators 28 erforderlich, um eine inakzeptable Verringerung seiner katalytischen Aktivität festzustellen und eine genaue Dosierung des Reduktionsmittels zu gewährleisten. Erfindungsgemäß erfolgt die Diagnose des SCR-Katalysators 28 mithilfe eines stromauf von diesem angeordneten $NO_X$-Sensors 48. Vorzugsweise ist der Sensor 48 stromauf der Reduktionsmitteldosiereinrichtung 30 und besonders bevorzugt stromauf des Oxidationskatalysators 26 angeordnet. Durch diese motornahe Anordnung des $NO_X$-Sensors 46 wird ein schnelles Erreichen seiner Betriebsfähigkeit nach einem Kaltstart des Motors 12 erzielt. Ein Ausgangssignal NOX1, NOX2 des $NO_X$-Sensors 46 geht als Eingangsgröße in eine Diagnoseeinrichtung 50 ein. Weiterhin kann die Diagnoseeinrichtung 50 Informationen über den aktuellen Betriebspunkt des Fahrzeugs 10 und der Brennkraftmaschine 12 erhalten, insbesondere einer Fahrzeuggeschwindigkeit v_Fzg und eines durch den Fahrer in Form einer Fahrpedalbetätigung angeforderten Wunschmoments M_w. In Abhängigkeit von diesen und gegebenenfalls anderen Größen führt die Diagnoseeinrichtung eine Diagnose des SCR-Katalysators 28 gemäß dem erfindungsgemäßen Verfahren aus. Zu diesem Zweck gibt die Diagnoseeinrichtung Steuersignale aus (in Figur 1 durch durchgehende Pfeile dargestellt), mit welchen das AGR-Ventil 44, die Abgasklappe 46 sowie die Kraftstoffzufuhr zur Brennkraftmaschine 12 angesteuert werden.

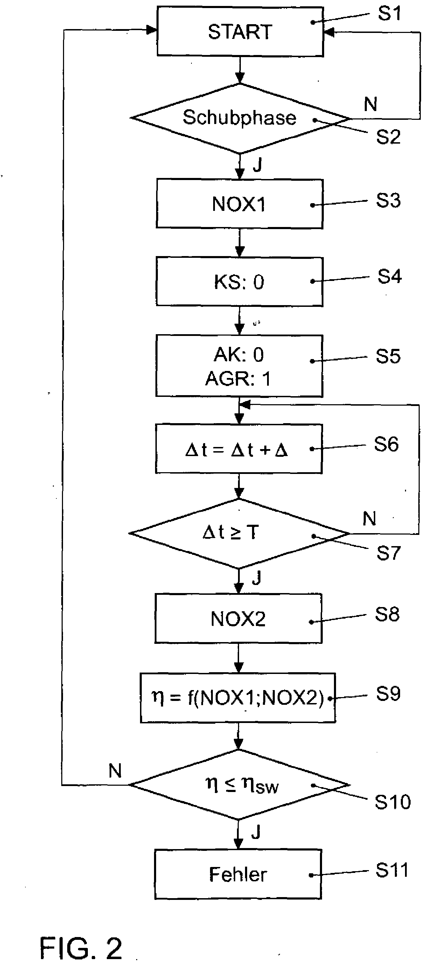

Ein bevorzugter Ablauf des erfindungsgemäßen Verfahrens zur Diagnose des SCR-Katalysators 28 ist wird nachfolgend anhand von Figur 2 näher erläutert.

Das Verfahren startet in Schritt S1 und geht über zu Schritt S2, in dem ein Betriebspunkt des Fahrzeugs 10 dahin gehend überprüft wird, ob eine Schubphase vorliegt, das heißt, ob die aktuelle kinetische Energie des Fahrzeugs größer als das aktuell durch den Fahrer angefordertes Drehmoment M_w ist. Zur Ermittlung des Vorliegens einer Schubphase des Fahrzeugs kann die Diagnoseeinrichtung 50 beispielsweise das durch den Fahrer angeforderte Fahrmoment M_w und die aktuelle Fahrzeuggeschwindigkeit V_Fzg auswerten.

Alternativ kann die Diagnoseeinrichtung 50 jedoch auch direkt ein entsprechendes Schubphasensignal aus einer allgemeinen Motorsteuerung erhalten. Sofern in der Abfrage S2 keine Schubphase des Fahrzeugs 10 festgestellt wird, bricht das Verfahren ab und geht zurück zu Schritt S1.

Wird andernfalls eine Schubphase des Fahrzeugs erkannt, geht das Verfahren zu Schritt S3 über, in dem die Messung einer ersten Konzentration des Abgases an Stickoxiden NOX1 mittels des NOx-Sensors 48 erfolgt. Die erste NOx-Konzentration NOX1 entspricht somit der NOx-Rohemission der Brennkraftmaschine 10 während des gefeuerten Betriebs, die am Eingang des SCR-Katalysators 28 vorliegt.

Sodann geht das Verfahren zu Schritt S4 über, in dem eine Kraftstoffabschaltung der Brennkraftmaschine 10 erfolgt, das heißt die einzuspritzende Kraftstoffmenge KS auf Null gesetzt wird. Gleichzeitig bleibt eine in Figur 1 nicht dargestellte Drosselklappe in der Luftleitung 14 der Brennkraftmaschine 12 geöffnet.

Im anschließenden Schritt S5 wird die Abgasrückführung über das ND-Abgasrückführungssystem 38 eingeleitet. Zu diesem Zweck wird die Abgasklappe (AK) 46 geschlossen und das AGR-Ventil 44 der AGR-Leitung 40 maximal geöffnet. Die Förderung des über die AGR-Leitung 40 rückgeführten Abgases erfolgt durch die in der Schaubphase von dem Fahrzeug 10 geschleppte Brennkraftmaschine 10.

Die nachfolgenden Schritte S6 und S7 entsprechen einer Timerfunktion. Hierzu wird in Schritt S6 ein Zeitzähler Δt um ein vorbestimmtes Inkrement Δ erhöht. In der anschließenden Abfrage S7 wird überprüft, ob der Zeitzähler Δt eine vorbestimmte Wartezeit T erreicht hat. Die Wartezeit T wird dabei so vorgegeben, dass sie mindestens der Abgaszirkulationszeit entspricht, die das Abgas seit der Messung der ersten NOx-Konzentration NOX1 in Schritt S3 bis zum erneuten Erreichen des NOx-Sensors 48 entspricht. Solange der Zeitzähler Δt kleiner als die Wartezeit T ist, die Abfrage in S7 also verneint wird, geht das Verfahren zurück zu Schritt S6, um den Zeitzähler Δt entsprechend hoch zu zählen.

Wenn der Zeitzähler Δt die Wartezeit T erreicht hat, die Abfrage S7 also bejaht wird, geht das Verfahren zum Schritt S8 weiter, in dem eine erneute Messung der NOx-Konzentration des Abgases mit dem NOx-Sensor 48 erfolgt. Durch die vorausgegangene Warteschleife in Form der Schritte S6 und S7 wird sichergestellt, dass zu dem Zeitpunkt der Messung in Schritt S8 die Konzentrationsmessung durch den Sensor 48 in einem Abgas erfolgt, das bereits den SCR-Katalysator 28 durchlaufen hat. Idealerweise erfolgt die Messung in Schritt S8 in demselben Abgasvolumen, welches auch der ersten Konzentrationsmessung in Schritt S3 zugrunde lag. Die in Schritt S8 gemessene NOx-Konzentration NOX2 entspricht somit der stromab des SCR-Katalysators 28 vorliegenden Konzentration.

In Schritt S9 erfolgt die Ermittlung eines Zustands des SCR-Katalysators 28 als Funktion der in den Schritten S3 und S8 gemessenen ersten NOX-Konzentration NOX1 und zweiten NOx-Konzentration NOX2. Beispielsweise kann der Katalysatorzustand in Form seines Wirkungsgrads η gemäß folgender Gleichung ermittelt werden.

$$\eta = 1 - \frac{NOX2}{NOX1}$$

Bei einem ideal intakten SCR-System ist die NOx-Konzentration NOX2 während der Schubphase nahe Null und der Wirkungsgrad η nahe 1. Bei einem vollständig inaktiven SCR-System hingegen liegt NOX2 auf dem Niveau der NOx-Rohemission NOX1. In diesem Fall ist der Wirkungsgrad η nahe Null.

In der anschließenden Abfrage in Schritt S10 erfolgt ein Vergleich des ermittelten Katalysatorzustandes η mit einem geeigneten Schwellenwert $\eta_{SW}$. Im Falle eines geschädigten SCR-Katalysators 28 wird in der Abfrage S10 ein Unterschreiten des Wirkungsgrades unterhalb der Schwelle festgestellt und in Schritt S11 ein Fehlersignal ausgegeben. Ist hingegen der festgestellte Wirkungsgrad höher als die vorgegebene Schwelle, arbeitet das SCR-System zufriedenstellend und das Verfahren geht zurück zu seinem Ausgangspunkt.

**Bezugszeichenliste**

| | |
|---|---|
| 10 | Kraftfahrzeug |
| 12 | Brennkraftmaschine |
| 14 | Luftleitung |
| 16 | Luftkrümmer |
| 18 | Luftfilter |
| 20 | Abgastrakt |
| 22 | Abgaskrümmer |
| 24 | Abgaskanal |
| 26 | Oxidationskatalysator |
| 28 | Abgaskatalysator / SCR-Katalysator |
| 30 | Reduktionsmitteldosiereinrichtung |
| 32 | Mischer |
| 34 | Turbine |
| 36 | Verdichter |
| 38 | Niederdruck-Abgasrückführung |
| 40 | Abgasrückführungsleitung |
| 42 | AGR-Kühler |
| 44 | AGR-Ventil |
| 46 | Abgassperrmittel |
| 48 | $NO_X$-Sensor |
| 50 | Diagnoseeinrichtung |

| | |
|---|---|
| NOX1 | erste Konzentration der Abgaskomponente während gefeuerten Betriebs |
| NOX2 | zweite Konzentration der Abgaskomponente während ungefeuerten Schubbetriebs |
| M_w | angefordertes Fahrmoment |

| | |
|---|---|
| V_Fzg | Fahrzeuggeschwindigkeit |
| $\eta$ | Katalysatorzustand / Katalysatorwirkungsgrad |
| $\eta_{SW}$ | Schwellenwert |
| $\Delta t$ | Zeitzähler |
| $\Delta$ | Zeitinkrement |

**Patentansprüche**

1. Verfahren zur Diagnose eines in einem Abgastrakt (20) einer Brennkraftmaschine (12) eines Kraftfahrzeugs (10) angeordneten und zur Konvertierung mindestens einer Abgaskomponente geeigneten Abgaskatalysators (28), wobei der Abgastrakt (20) ein stromauf des Abgaskatalysators (28) angeordneten Abgassensor (48) sowie ein Abgasrückführsystem (38) aufweist, das ausgebildet ist, zumindest einen Teil des Abgases stromab des Abgaskatalysators (28) aus einem Abgaskanal (24) des Abgastrakts (20) zu entnehmen und der Brennkraftmaschine (12) zuzuführen, umfassend die Schritte:

   - Messen einer ersten Konzentration (NOX1) der Abgaskomponente stromauf des Abgaskatalysators (28) mittels des Abgassensors (48) während eines gefeuerten Betriebs der Brennkraftmaschine (12),
   - Rückführen zumindest eines Teils des Abgases über das Abgasrückführsystem (38) während eines ungefeuerten Schubbetriebs der Brennkraftmaschine (12),
   - Messen einer zweiten Konzentration (NOX2) der Abgaskomponente mittels des Abgassensors (48) während des ungefeuerten Schubbetriebs der Brennkraftmaschine (12) und
   - Bestimmen eines Zustands des Abgaskatalysators (28) in Abhängigkeit von der ersten und zweiten Konzentration (NOX1, NOX2) der Abgaskomponente.

2. Verfahren nach Anspruch 1, **dadurch gekennzeichnet, dass** die Abgaskomponente Stickoxide (NO$_X$) umfasst und der Abgaskatalysator (28) ein NO$_X$-Katalysator oder SCR-Katalysator und der Abgassensor (48) ein NO$_X$-Sensor ist.

3. Verfahren nach Anspruch 1, **dadurch gekennzeichnet, dass** das Messen der ersten Konzentration (NOX1) der Abgaskomponente nach Feststellung einer Schubphase des Fahrzeugs (10) vor Beginn des ungefeuerten Schubbetriebs der Brennkraftmaschine (12) erfolgt.

4. Verfahren nach Anspruch 1, **dadurch gekennzeichnet, dass** das Messen der zweiten Konzentration (NOX2) der Abgaskomponente während des ungefeuerten Schubbetriebs der Brennkraftmaschine (12) nach Ablauf einer vorbestimmten Wartezeit (T) erfolgt.

5. Verfahren nach Anspruch 4, **dadurch gekennzeichnet, dass** die Wartezeit (T) mindestens entsprechend einer Abgaszirkulationszeit seit der Messung der ersten Konzentration (NOX1) der Abgaskomponente vorbestimmt wird.

6. Verfahren nach Anspruch 1, **dadurch gekennzeichnet, dass** während des ungefeuerten Schubbetriebs der Brennkraftmaschine (12) das gesamte Abgas über das Abgasrückführsystem (38) rückgeführt wird.

7. Verfahren nach Anspruch 1, **dadurch gekennzeichnet, dass** die Rückführung des Abgases über das Abgasrückführsystem (38) durch Schließen eines stromab einer Abzweigungsstelle einer Abgasrückführleitung (40) des Abgasrückführsystems (38) angeordneten Abgassperrmittels (46) erfolgt.

8. Kraftfahrzeug (10), umfassend

   - eine Brennkraftmaschine (12),
   - einen Abgastrakt (20) mit einem Abgaskanal (24), einem in dem Abgaskanal (24) angeordneten und zur Konvertierung mindestens einer Abgaskomponente geeigneten Abgaskatalysator (28) und einen stromauf des Abgaskatalysators (28) angeordneten Abgassensor (48) zur Detektion der Abgaskomponente,
   - ein Abgasrückführsystem (38), das eingerichtet ist, zumindest einen Teil des Abgases stromab des Abgaskatalysators (28) aus dem Abgaskanal (24) zu entnehmen und der Verbrennungskraftmaschine (12) zuzuführen, und
   - eine zur Ausführung des Verfahrens zur Diagnose des Abgaskatalysators (28) nach einem der Ansprühe 1 bis 7 eingerichtete Diagnoseeinrichtung (50).

9. Kraftfahrzeug nach Anspruch 8, ferner umfassend ein stromab einer Abzweigungsstelle einer Abgasrückführleitung (40) des Abgasrückführsystems (38) angeordnetes Abgassperrmittel (46).

10. Kraftfahrzeug nach Anspruch 8 oder 9, ferner umfassend einen Abgasturbolader (34, 36) mit einer in dem Abgaskanal (24) angeordneten Turbine (34), wobei das Abgasrückführsystem (38) als Niederdruck-Abgasrückführsystem ausgestaltet ist.

**Claims**

1. Method for diagnosing an exhaust gas catalytic converter (28) which is arranged in an exhaust gas section (20) of an internal combustion engine (12) of a motor vehicle (10) and is suitable for converting at least one exhaust gas component, wherein the exhaust section (20) has an exhaust gas sensor (48) arranged upstream of the exhaust gas catalytic converter (28), and an exhaust gas recirculation system (38) which is designed to extract at least part of the exhaust gas downstream of the exhaust gas catalytic converter (28) from an exhaust gas duct (24) of the exhaust gas section (20) and to feed it to the internal combustion engine (12) comprising the steps:

- measuring a first concentration (NOX1) of the exhaust gas component upstream of the exhaust gas catalytic converter (28) by means of the exhaust gas sensor (48) during fired operation of the internal combustion engine (12),
- recirculating at least part of the exhaust gas via the exhaust gas recirculation system (38) during unfired overrun mode operation of the internal combustion engine (12),
- measuring a second concentration (NOX2) of the exhaust gas component by means of the exhaust gas sensor (48) during the unfired overrun mode operation of the internal combustion engine (12), and
- determining a state of the exhaust gas catalytic converter (28) as a function of the first and second concentrations (NOX1, NOX2) of the exhaust gas component.

2. Method according to Claim 1, **characterized in that** the exhaust gas component comprises nitrogen oxides $NO_x$, and the exhaust gas catalytic converter (28) is an $NO_x$ catalytic converter or SCR catalytic converter, and the exhaust gas sensor (48) is an $NO_x$ sensor.

3. Method according to Claim 1, **characterized in that** the measurement of the first concentration (NOX1) of the exhaust gas component is carried out after the detection of an overrun phase of the vehicle (10) before the start of the unfired overrun mode operation of the internal combustion engine (12).

4. Method according to Claim 1, **characterized in that** the measurement of the second concentration (NOX2) of the exhaust gas component is carried out during the unfired overrun mode operation of the internal combustion engine (12) after the expiry of a predetermined waiting time (T).

5. Method according to Claim 4 **characterized in that** the waiting time (T) is predetermined at least in accordance with an exhaust gas circulation time since the measurement of the first concentration (NOX1) of the exhaust gas component.

6. Method according to Claim 1, **characterized in that** during the unfired overrun mode operation of the internal combustion engine (12) the entirety of the exhaust gas is recirculated via the exhaust gas recirculation system (38).

7. Method according to Claim 1, **characterized in that** the recirculation of the exhaust gas via the exhaust gas recirculation system (38) is carried out by closing an exhaust gas shut-off means (46) which is arranged downstream of a branching point of an exhaust gas recirculation line (40) of the exhaust gas recirculation system (38).

8. Motor vehicle (10) comprising

- an internal combustion engine (12),
- an exhaust gas section (20) having an exhaust gas duct (24), an exhaust gas catalytic converter (28) which is arranged in the exhaust gas duct (24) and is suitable for converting at least one exhaust gas component, and an exhaust gas sensor (48) which is arranged upstream of the exhaust gas catalytic converter (28) and has the purpose of detecting the exhaust gas component,
- an exhaust gas recirculation system (38) which is configured to extract at least part of the exhaust gas downstream of the exhaust gas catalytic converter (28) from the exhaust gas duct (24) and to feed it to the internal combustion engine (12), and
- a diagnostic device (50) which is configured to carry out the method for diagnosing the exhaust gas catalytic converter (28) according to one of Claims 1 to 7.

9. Motor vehicle according to Claim 8, also comprising an exhaust gas shut-off means (46) which is arranged downstream of an exhaust gas branching point of an exhaust gas recirculation line (40) of the exhaust gas recirculation system (38).

10. Motor vehicle according to Claim 8 or 9, also comprising an exhaust gas turbo charger (34, 36) having a turbine (34) which is arranged in the exhaust gas duct (24), wherein the exhaust gas recirculation system (38) is configured as a low-pressure exhaust gas recirculation system.

**Revendications**

1. Procédé de diagnostic d'un catalyseur d'échappement (28) disposé dans un trajet des gaz d'échappement (20) d'un moteur à combustion interne (12) d'un véhicule automobile (10) et adapté pour la conversion d'au moins une composante des gaz d'échappement, le trajet des gaz d'échappement (20) possédant un capteur de gaz d'échappement (48) disposé en amont du catalyseur d'échappement (28) ainsi qu'un système de recyclage des gaz d'échappement (38), lequel est configuré pour prélever au moins une partie des gaz d'échappement hors d'un conduit de gaz d'échappement (24) du trajet des gaz d'échappement (20) en aval du catalyseur d'échappement (28) et l'acheminer au moteur à combustion interne (12), comprenant les étapes suivantes :

    - mesure d'une première concentration (NOX1) de la composante des gaz d'échappement en amont du catalyseur d'échappement (28) au moyen du capteur de gaz d'échappement (48) pendant un fonctionnement en mode alimenté du moteur à combustion interne (12),

    - recyclage d'au moins une partie des gaz d'échappement par le biais du système de recyclage des gaz d'échappement (38) pendant un fonctionnement en mode de poussée non alimenté du moteur à combustion interne (12),

    - mesure d'une deuxième concentration (NOX2) de la composante des gaz d'échappement au moyen du capteur de gaz d'échappement (48) pendant le fonctionnement en mode de poussée non alimenté du moteur à combustion interne (12) et

    - détermination d'un état du catalyseur d'échappement (28) en fonction de la première et de la deuxième concentration (NOX1, NOX2) de la composante des gaz d'échappement.

2. Procédé selon la revendication 1, **caractérisé en ce que** la composante des gaz d'échappement comprend de l'oxyde d'azote (NOx) et le catalyseur d'échappement (28) est un catalyseur de NOx ou un catalyseur à SCR et le capteur de gaz d'échappement (48) est un capteur de NOx.

3. Procédé selon la revendication 1, **caractérisé en ce que** la mesure de la première concentration (NOX1) de la composante des gaz d'échappement est effectuée après la constatation d'une phase de poussée du véhicule (10) avant le début du fonctionnement en mode de poussée non alimenté du moteur à combustion interne (12).

4. Procédé selon la revendication 1, **caractérisé en ce que** la mesure de la deuxième concentration (NOX2) de la composante des gaz d'échappement est effectuée pendant le fonctionnement en mode de poussée non alimenté du moteur à combustion interne (12) après écoulement d'un temps d'attente (T) prédéfini.

5. Procédé selon la revendication 4, **caractérisé en ce**

**que** le temps d'attente (T) est prédéfini au moins conformément au temps de circulation des gaz d'échappement depuis la mesure de la première concentration (NOX1) de la composante des gaz d'échappement.

6. Procédé selon la revendication 1, **caractérisé en ce que** pendant le fonctionnement en mode de poussée non alimenté du moteur à combustion interne (12), la totalité des gaz d'échappement sont recyclés par le biais du système de recyclage des gaz d'échappement (38).

7. Procédé selon la revendication 1, **caractérisé en ce que** le recyclage des gaz d'échappement par le biais du système de recyclage des gaz d'échappement (38) est effectué en fermant un moyen de fermeture des gaz d'échappement (46) disposé en aval d'un point de dérivation d'une conduite de recyclage des gaz d'échappement (40) du système de recyclage des gaz d'échappement (38).

8. Véhicule automobile (10), comprenant

    - un moteur à combustion interne (12),

    - un trajet des gaz d'échappement (20) muni d'un conduit de gaz d'échappement (24), d'un catalyseur d'échappement (28) disposé dans le conduit de gaz d'échappement (24) et adapté pour convertir au moins une composante des gaz d'échappement et un capteur de gaz d'échappement (48) disposé en amont du catalyseur d'échappement (28) servant à la détection de la composante des gaz d'échappement,

    - un système de recyclage des gaz d'échappement (38) qui est configuré pour prélever au moins une partie des gaz d'échappement hors du conduit de gaz d'échappement (24) en aval du catalyseur d'échappement (28) et l'acheminer au moteur à combustion interne (12), et

    - un dispositif de diagnostic (50) configuré pour mettre en oeuvre le procédé de diagnostic du catalyseur d'échappement (28) selon l'une des revendications 1 à 7.

9. Véhicule automobile selon la revendication 8, comprenant en outre un moyen de fermeture des gaz d'échappement (46) disposé en aval d'un point de dérivation d'une conduite de recyclage des gaz d'échappement (40) du système de recyclage des gaz d'échappement (38).

10. Véhicule automobile selon la revendication 8 ou 9, comprenant en outre un turbocompresseur de gaz d'échappement (34, 36) pourvu d'une turbine (34) disposée dans le conduit de gaz d'échappement (24), le système de recyclage des gaz d'échappement (38) étant réalisé sous la forme d'un système

**EP 3 025 045 B1**

de recyclage des gaz d'échappement à basse pression.

FIG. 1

FIG. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010042442 A1
- DE 102010050413 A1
- DE 10349126 A1

- WO 2004046528 A1
- WO 2013139848 A1
- WO 2014095215 A1